# EUROPÄISCHE PATENTANMELDUNG

(11) **EP 1 311 142 A1**
(43) Veröffentlichungstag der Anmeldung: **14.05.2003**
(21) Anmeldenummer: 02024393.7
(22) Anmeldetag: 04.11.2002
(51) Int. Cl.: H05B 37/02

(54) **System zum Steuern mehrerer in einem Raum angeordneter Aktoren**

(30) Priorität: 07.11.2001 DE 10154528
(71) Anmelder: Luxmate Controls GmbH, 6850 Dornbirn (AT)
(72) Erfinder: Werner, Walter, Dr., 6850 Dornbirn (AT); Geiginger, Joachim, 6845 Hohenems (AT); Bickert, Markus, 9404 Rohrschacherberg (CH); Beer, Hermann, 9427 Wolfhalden (CH)
(74) Vertreter: Schmidt-Evers, Jürgen, Dipl.-Ing.

(57) **Zusammenfassung**

Bei einem System zum Steuern mehrerer in einem Raum (1) angeordneter Aktoren (2-4) übermittelt ein Anwesenheitssensor (8) beim Feststellen einer Bewegung eines Objekts in dem Raum (1) ein Aktivierungssignal an eine Steuereinrichtung (7), die als Reaktion auf das Aktivierungssignal die Aktoren (2-4) für die Dauer einer bestimmten Nachlaufzeit aktiviert. Um flexibel auf die sich ändernden Verhältnisse in der Mobilität in dem überwachten Raum (1) zu reagieren, verändert die Steuereinrichtung (7) die Dauer der Nachlaufzeit in Abhängigkeit von der Häufigkeit der von dem Anwesenheitssensor (8) empfangenen Aktivierungssignale.

## Beschreibung

Die vorliegende Erfindung betrifft ein System und ein Verfahren zum Steuern mehrerer in einem Raum angeordneter Aktoren, wobei die Ansteuerung der Aktoren in Abhängigkeit von den Bewegungen in dem Raum befindlicher Objekte erfolgt.

Es sind Systeme zur automatischen Steuerung von in einem Raum angeordneten Aktoren, wie beispielsweise Beleuchtungseinrichtungen, Abblendeinrichtungen, Heizungseinrichtungen oder dergleichen bekannt, die bei Anwesenheit einer Person die Aktoren automatisch aktivieren. Zum Erkennen der Anwesenheit bzw. Bewegung einer in dem Raum befindlichen Person werden Anwesenheitssensoren verwendet, die beim Feststellen einer Bewegung ein Aktivierungssignal erzeugen. Dieses Aktivierungssignal wird entweder direkt zum Einschalten der Aktoren verwendet oder an eine zwischengeschaltete Steuereinrichtung übermittelt, die als Reaktion auf das Aktivierungssignal die Aktoren aktiviert, beispielsweise das Licht einschaltet. Die Aktoren bleiben dann in der Regel für eine bestimmte Dauer, die sog. Nachlaufzeit aktiviert und werden am Ende dieser Nachlaufzeit wieder zurückgesetzt bzw. ausgeschaltet, sofern nicht in der Zwischenzeit aufgrund einer erneut von dem Sensor festgestellten Bewegung eine neue Nachlaufperiode in Gang gesetzt wurde.

Üblicherweise kann bei derartigen Systemen die Nachlaufzeit manuell eingestellt werden, beispielsweise über eine an dem Sensor vorgesehene Einstellschraube. Dies ist deshalb sinnvoll, da je nach Art der in dem Raum stattfindenden Aktivitäten eine bestimmte Dauer für die Nachlaufzeit optimal ist. Befinden sich beispielsweise in dem Raum Arbeitsplätze an Schreibtischen oder Computern, so ist mit verhältnismäßig wenigen und langsamen Bewegungen zu rechnen. In diesem Fall ist eine etwas längere Nachlaufzeit wünschenswert, da andernfalls die Gefahr besteht, daß beispielsweise das Licht noch während der Anwesenheit einer Person automatisch abgeschaltet wird. Wird hingegen der von dem Sensor überwachte Raum nur vorübergehend von Personen betreten, so ist aus Stromspargründen eine kürzere Nachlaufzeit wünschenswert.

Mit Hilfe einer derartigen manuellen Einstellung kann die Nachlaßzeit des Systems zwar bei der Installation individuell eingestellt werden, allerdings bleibt sie dann von diesem Zeitpunkt an unverändert, falls nicht eine manuelle Neueinstellung durchgeführt wird.

Ausgehend von dem oben beschriebenen System zum Steuern mehrerer in einem Raum angeordneter Aktoren liegt der vorliegenden Erfindung die Aufgabe zugrunde, das System dahingehend zu verbessern, daß es flexibler auf die in dem Raum stattfindenden Vorgänge reagiert.

Diese Aufgabe wird durch ein System zum Steuern mehrerer in einem Raum angeordneter Aktoren gemäß Anspruch 1 bzw. durch ein Verfahren gemäß Anspruch 13 gelöst. Das erfindungsgemäße System zeichnet sich dadurch aus, daß die Steuereinrichtung die Dauer der Nachlaufzeit in Abhängigkeit von der Häufigkeit der von dem Anwesenheitssensor empfangenen Aktivierungssignale verändert. Durch die auf diese Weise erreichte dynamische Steuerung der Nachlaufzeit wird ein auf den Benutzer bzw. die Montageumgebung des Systems adaptiertes Betriebsverhalten erreicht. Es ist dementsprechend nicht mehr notwendig, bei der Installation des Systems eine vorgegebene Nachlaufzeit einzustellen, die lediglich einen Kompromiß darstellt. Vielmehr kann das erfindungsgemäße System flexibel auf die zu verschiedenen Zeiten unterschiedlichen Aktivitäten reagieren.

Vorzugsweise wird die Nachlaufzeit jeweils nach einer bestimmten Überwachungsperiode neu festgelegt, wobei die Dauer dieser Überwachungsperiode insbesondere der zuletzt eingestellten Nachlaufzeit entsprechen kann. Eine einfach durchzuführende Realisierung der Regelung der Nachlaufzeit kann dann darin bestehen, daß die neue Nachlaufzeit in Abhängigkeit von der Anzahl der in der letzten Überwachungsperiode festgestellten Bewegungsvorgänge eingestellt wird, wobei insbesondere eine kurze Nachlaufzeit eingestellt wird, wenn eine hohe Bewegungsrate festgestellt wird, und eine lange Nachlaufzeit eingestellt wird, wenn die Häufigkeit der festgestellten Bewegungen niedrig ist. Ferner können eine Ober- und Untergrenze für die von dem Regelkreis eingestellte Nachlaufzeit vorgegeben werden.

Eine andere Weiterentwicklung des Systems besteht darin, die Intensität der erfaßten Bewegungen zu berücksichtigen, wobei beim Erkennen von schnellen bzw. intensiven Bewegungen die Nachlaufzeit verkürzt und beim Erkennen von langsamen Bewegungen die Nachlaufzeit verlängert wird.

Vorzugsweise wird zum Erkennen der Bewegungen ein sog. passiver Infrarot-Sensor (PIR- bzw. passive infrared-Sensor) verwendet, mit dem die von Objekten emittierte Infrarot-Strahlung erfaßt wird. Bei den automatisch angesteuerten Aktoren kann es sich sowohl um Beleuchtungseinrichtungen als auch um Abblendeinrichtungen zum Abblenden des Raumes, Einrichtungen zum Regeln der Temperatur oder des Klimas oder dergleichen handeln. Dabei kann ferner vorgesehen sein, für die verschiedenen Aktoren unterschiedlich lange Nachlaufzeiten vorzusehen.

Im folgenden soll die Erfindung anhand der beiliegenden Zeichnungen näher erläutert werden. Es zeigen:
- Fig. 1: eine schematische Darstellung des erfindungsgemäßen Systems zum Steuern mehrerer Aktoren;
- Fig. 2: ein Diagramm zur Erläuterung eines bevorzugten Ausführungsbeispiels zum Regeln der Nachlaufzeit;
- Fig. 3: einen Sensor zum Erfassen von Bewegungen innerhalb des Raumes;
- Fig. 4: eine schematische Darstellung der Funktionsweise des in Fig. 3 dargestellten Sensors; und
- Fig. 5: ein Diagramm der von dem Sensor erzeugten Signale.

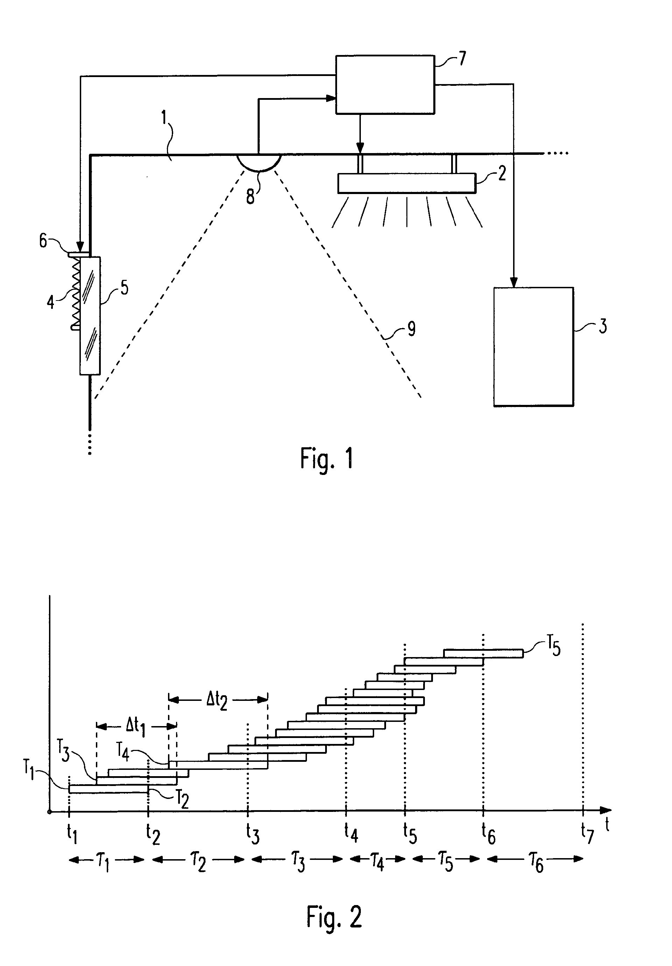

Fig. 1 zeigt ein System zum Besteuern von drei verschiedenen Aktoren in einem Raum 1. Bei diesen Aktoren handelt es sich um eine Beleuchtungseinrichtung 2, eine Heizung oder Klimaanlage 3 sowie um eine einem Fenster 5 zugeordnete Jalousie 4. Die Ansteuerung der Beleuchtungseinrichtung 2, der Klimaanlage 3 und des Verstellmotors 6 der Jalousie 4 erfolgt durch eine gemeinsame Steuereinrichtung 7. Das Gesamtsystem ist dabei derart eingerichtet, daß von dem Zeitpunkt an, zu dem sich mindestens eine Person in dem Raum 1 befindet, die drei Aktoren 2-5 in einem vorgegebenen Betriebszustand angesteuert werden. Beispielsweise wird das Licht eingeschaltet, die Temperatur auf einen bestimmten Wert geregelt und die Jalousie 4 entsprechend der Außenhelligkeit verstellt, um Blendeffekte durch das Sonnenlicht zu vermeiden.

Zum Erkennen der Anwesenheit einer oder mehrerer Personen ist ein Anwesenheitssensor 8 vorgesehen, der die Bewegung von Objekten innerhalb eines dem Sensor 8 zugeordneten Detektionsbereichs 9 erkennt. Sobald von dem Sensor 8 eine Bewegung festgestellt wurde, erzeugt dieser ein Aktivierungssignal und übermittelt dieses an die Steuereinrichtung 7, die als Reaktion auf das empfangene Aktivierungssignal die drei Aktoren 2-4 in der oben beschriebenen Weise aktiviert.

Sofern nach dem Aktivieren der drei Aktoren 2-4 keine weiteren Bewegungen mehr von dem Sensor erfaßt wurden, beispielsweise weil die Person den Raum gleich wieder verlassen hat, werden die drei Aktoren 2-4 nach einer gewissen Nachlaufzeit wieder ausgeschaltet oder in einen Ruhezustand versetzt, um den Energieverbrauch des gesamten Systems so niedrig wie möglich zu halten. Diese Nachlaufzeit kann für die verschiedenen Aktoren 2-4 jeweils unterschiedlich sein. So könnte beispielsweise vorgesehen sein, die Beleuchtungseinrichtung 2 schon nach einer Zeit von beispielsweise 5 Minuten abzuschalten, während hingegen die Klimaanlage 3 für eine etwas längere Nachlaufzeit von 10 Minuten aktiviert bleibt. Grundsätzlich werden jedoch die Nachlaufzeiten für die verschiedenen Aktoren 2-4 erfindungsgemäß durch die Steuereinrichtung 7 nachgeregelt, um sie an die Häufigkeit der von dem Sensor 8 in dem Raum 1 erfaßten Bewegungen anzupassen. Dabei werden die Nachlaufzeiten verlängert, wenn relativ wenig Bewegungen erfaßt werden, während hingegen die Nachlaufzeiten verkürzt werden, wenn von dem Anwesenheitssensor 8 sehr viele Bewegungen erkannt werden. Ein bevorzugter Algorithmus zum Nachregeln einer Nachlaufzeit soll im folgendenden anhand von Fig. 2 erläutert werden.

Fig. 2 zeigt ein Diagramm zum Ablauf der Nachlaufzeitsteuerung eines Aktors, beispielsweise der Helligkeitseinrichtung, bei einer stark wechselnden Mobilität innerhalb des überwachten Raumes. Zu Beginn des Regelzyklusses befindet sich die Helligkeitseinrichtung in einem Ruhezustand, d.h. sie ist ausgeschaltet. Betritt zu dem Zeitpunkt T₁ eine Person den Raum, so wird dies von dem Anwesenheitssensor erkannt. Dieser übermittelt dementsprechend ein Aktivierungssignal an die Steuereinrichtung, die als Reaktion darauf das Licht einschaltet. Zu Beginn dieses Regelzyklusses wird für den Aktor eine bestimmte vorgegebene Nachlaufzeit Δt₁ eingestellt, deren Länge durch den entsprechenden Balken dargestellt ist. Das bedeutet, daß das Licht nach Ablauf dieser Nachlaufzeit zum Zeitpunkt T₂ wieder ausgeschaltet wird, sofern in der Zwischenzeit keine weiteren Bewegungen von dem Sensor detektiert werden. Im dargestellten Beispiel wird allerdings zum Zeitpunkt T₃ eine weitere Bewegung erfaßt, durch die eine weitere Nachlaufphase - wiederum mit der Dauer Δt₁ - in Gang gesetzt wird.

Um die Nachlaufzeiten an die Häufigkeit der erfaßten Bewegungen anzupassen, findet nach einer bestimmten Überwachungsperiode τ₁ zum Zeitpunkt t₂ eine Nachregelung der Nachlaufzeiten statt. Dabei wird in Abhängigkeit davon, wie viele Bewegungsvorgänge in der Überwachungsperiode τ₁ festgestellt wurden, eine neue Nachlaufzeit eingestellt. Da im vorliegenden Beispiel während der ersten Überwachungsperiode τ₁ lediglich drei Bewegungen detektiert wurden und somit nur eine geringe Mobilität vorliegt, muß davon ausgegangen werden, daß sich in dem überwachten Raum nur wenige Personen befinden und Tätigkeiten mit nur wenigen Bewegungen durchführen. Um zu vermeiden, daß das Licht vorzeitig ausgeschaltet wird, wird deshalb nunmehr eine etwas längere Nachlaufzeit Δt₂ eingestellt. Wie der Darstellung in Fig. 2 entnommen werden kann, bedeutet dies, daß bei Bewegungen, die während der zweiten Überwachungsperiode τ₂ erkannt werden (beispielsweise zum Zeitpunkt T₄) Nachlaufphasen mit einem längeren Zeitraum Δt₂ in Gang gesetzt werden.

Grundsätzlich besteht die Möglichkeit, die soeben beschriebene Neufestsetzung der Nachlaufzeiten in regelmäßigen Abständen vorzunehmen, d.h. für die einzelnen Überwachungsperioden eine vorgegebene und unveränderte Zeitspanne festzulegen. Bei dem in Fig. 2 dargestellten bevorzugten Ausführungsbeispiel werden allerdings auch die Überwachungsperioden verändert und dabei insbesondere an die jeweils neu festgelegten Nachlaufzeiten angeglichen. Dementsprechend ist die zweite Überwachungsperiode τ₂ identisch zur Nachlaufzeit Δt₂ und größer als die erste Überwachungsperiode τ₁.

Nach Ablauf der zweiten Überwachungsperiode τ₂ zum Zeitpunkt t₃ erfolgt wiederum eine Nachregelung der Nachlaufzeit und zwar wiederum in Abhängigkeit davon, wieviel Bewegungsvorgänge in der abgelaufenen Überwachungsperiode τ₂ erkannt wurden. Da wiederum lediglich drei Bewegungsvorgänge detektiert wurden, bleibt die Nachlaufzeit für die nachfolgende Überwachungsperiode τ₃ unverändert.

Zum Zeitpunkt t₄ am Ende der dritten Überwachungsperiode τ₃ wird allerdings die Nachlaufzeit verkürzt, da während dieser dritten Überwachungsperiode τ₃ insgesamt sechs Bewegungen registriert wurden, was auf eine nunmehr hohe Mobilität in dem Raum schließen läßt. In gleicher Weise wird auch die Dauer der sich anschließenden vierten Überwachungperiode τ₄ verkürzt. Nach einer dementsprechend kurzen Zeit zum Zeitpunkt t₅ erfolgt wiederum entsprechend der oben beschriebenen Weise eine Neufestsetzung der Nachlaufzeit. Im vorliegenden Beispiel wird diese wieder ein wenig verlängert, da während der vierten Überwachungsperiode τ₄ lediglich vier Bewegungen registriert wurden.

Während der sich anschließenden fünften Überwachungsperiode τ₅ wurden lediglich zwei Bewegungen detektiert, so daß zum Zeitpunkt t₆ zu Beginn der sechsten Überwachungsperiode τ₆ eine deutlich längere Nachlaufzeit gewählt wird. Wie dem Diagramm in Fig. 2 allerdings entnommen werden kann, läuft zum Zeitpunkt T₅ noch vor Ablauf der sechsten Überwachungsperiode die zuletzt in Gang gesetzte Nachlaufzeit aus, ohne daß zwischenzeitlich eine weitere Bewegung registriert wurde. Dementsprechend wird zu diesem Zeitpunkt T₅ die Beleuchtungseinrichtung ausgeschaltet und der Regelzyklus für die Nachlaufzeit beendet. Wird nun zu einem späteren Zeitpunkt eine erneute Bewegung registriert, so beginnt der Regelzyklus von Neuem.

Dieser bevorzugte Zyklus zum Nachregeln der Nachlaufzeit zeichnet sich insbesondere durch seinen einfachen Algorithmus aus, so daß er dementsprechend einfach in das erfindungsgemäße System zu implentieren ist. Wie bereits zuvor erwähnt wurde, kann ferner vorgesehen sein, die Nachlaufzeiten für die verschiedenen Aktoren jeweils unabhängig voneinander einzustellen.

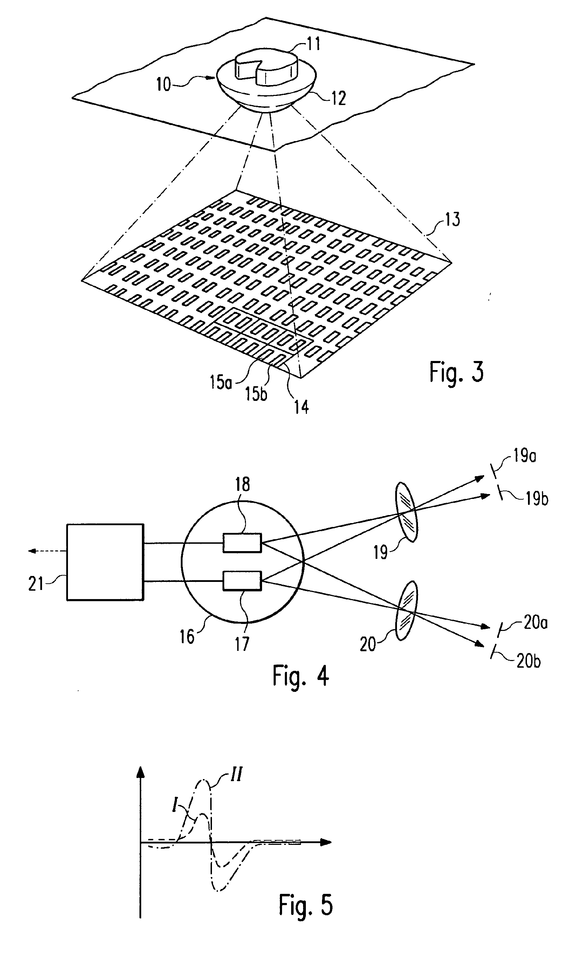

Eine Weiterbildung des erfindungsgemäßen Verfahrens zum Regeln der Nachlaufzeit besteht darin, neben der Häufigkeit der detektierten Bewegungen auch deren Intensität zu berücksichtigen. Ein hierzu geeigneter Sensor soll im folgenden anhand der Figuren 3-5 erläutert werden. Hierbei handelt es sich um einen sog. passiven Infrarot-Sensor 10, dessen wesentliche Bestandteile ein die Elektronik beinhaltendes Sensorgehäuse 11 sowie eine an der Unterseite angeordnete Linsenabdeckung 12 sind. Die aus einer Vielzahl von Einzellinsen bestehende Linsenabdeckung 12 dient dazu, den unterhalb des Sensors 10 gelegenen Detektionsbereich 13 auf ein in dem Gehäuse 11 angeordnetes Sensorelement abzubilden. Die Linsenanordnung 12 besteht aus einem infrarottransparenten Kunststoff, wobei die einzelnen Linsen als sog. Fresnel-Linsen ausgebildet sind.

Die Anordnung und Ausgestaltung der einzelnen Linsen ist derart, daß sie jeweils einen Teilbereich 14 des gesamten Detektionsbereiches 13 auf das IR-empfindliche Sensorelement abbilden, wie dies in Fig. 3 dargestellt ist. Ein Teilbereich 14 ist nochmals in zwei Ausschnitte 15a, 15b unterteilt, wobei der Bewegungssensor 10 derart ausgebildet ist, daß die Bewegung eines Wärmestrahlung emittierenden Objekts von einem Ausschnitt 15a in den anderen Ausschnitt 15b des Teilbereichs 14 erkannt wird, was nachfolgend anhand von Fig. 4 erläutert werden soll.

Fig. 4 zeigt den schematischen Aufbau des Sensorelements 16 sowie dessen Zusammenwirken mit zwei davor angeordneten Linsen 19 und 20 der Linsenanordnung. Das Sensorelement 16 besteht genau genommen aus zwei nebeneinander angeordneten infrarot-empfindlichen Sensorfeldern 17 und 18. Die vor dem Sensorelement 16 angeordnete Linse 19 bildet dann - wie dargestellt - zwei benachbarte Bereiche 19a und 19b auf das Sensorelement 16 ab, insbesondere den Bereich 19a auf das untere Sensorfeld 17 und den Bereich 19b auf das obere Sensorfeld 18. Beide Bereiche 19a und 19b stellen die zwei Ausschnitte 15a und 15b eines in Fig. 3 dargestellten Teilbereiches 14 des Detektionsbereichs 13 dar. In gleicher Weise bildet die zweite Linse 20 die Bereiche 20a und 20b auf die beiden Sensorfelder 17 und 18 ab.

Die von den beiden Sensorfeldern 17 und 18 erfaßten Signale werden einer Auswerteeinheit 21 zugeführt, wobei beispielsweise das Sensorelement 17 ein positives Signal und das Sensorelement 18 ein negatives Signal erzeugt. Befindet sich beispielsweise eine Infrarot-Strahlung emittierende Lichtquelle in dem Teilbereich 19a, so erzeugt das Sensorelement 16 insgesamt ein positives Signal. Wird die IR-Quelle von dem Teilbereich 19a in den Teilbereich 19b bewegt, so fällt das Sensorsignal von einem Maximalwert auf einen Minimalwert. Dies führt zu einem Signalverlauf, wie er in Fig. 5 dargestellt ist. Diese Änderung des Ausgangssignals des Sensorelements 16 wird von der Auswerteeinheit 21 als Bewegung bzw. Anwesenheit eines Wärmestrahlung emittierenden Objekts interpretiert, die dementsprechend ein Aktivierungssignal an die Steuereinrichtung übermittelt.

Dabei ist zu beachten, daß die Intensität des Ausgangssignals von der Intensität der Bewegung abhängt. Bewegt sich eine Person nur langsam, so wird beispielsweise ein Signalverlauf, wie er in Fig. 5 in der Kurve I dargestellt ist, erzeugt, während bei einer schnellen Bewegung ein deutlich intensiveres Signal (Kurve II) erhalten wird.

Es besteht nun die Möglichkeit, die Höhe dieses Signals zusätzlich zu berücksichtigen und dementsprechend die Nachlaufzeit zu verändern. Insbesondere kann vorgesehen sein, beim Erkennen von schnellen Bewegungen die Nachlaufzeit zu verkürzen, während beim Erkennen von langsamen Bewegungen die Nachlaufzeit verlängert wird.

Sowohl bei der anhand von Fig. 2 beschriebenen Basisversion des erfindungsgemäßen Verfahrens wie auch bei der erweiterten Variante, bei der die Intensität der Bewegungen berücksichtigt wird, kann für die nachgeregelten Nachlaufzeiten eine Maximaldauer von beispielsweise 15 Minuten und eine Minimaldauer von beispielsweise 3 Minuten vorgegeben werden.

Das erfindungsgemäße System wird somit in die Lage versetzt, flexibel auf die sich ändernden Verhältnisse in der Mobilität in dem überwachten Raum zu reagieren, so daß eine optimale Nachlaufzeit für die aktuelle Situation eingestellt werden kann.

## Patentansprüche

1. System zum Steuern mehrerer in einem Raum (1) angeordneter Aktoren (2-4), mit einer Steuereinrichtung (7), die mit sämtlichen Aktoren (2-4) in dem Raum (7) verbunden ist, und
mindestens einem mit der Steuereinrichtung (7) verbundenen Anwesenheitssensor (8) zum Erfassen der Bewegung eines in dem Raum (1) befindlichen Objekts,
wobei der Anwesenheitssensor (8) beim Feststellen einer Bewegung eines Objekts ein Aktivierungssignal an die Steuereinrichtung (7) übermittelt und die Steuereinrichtung (7) als Reaktion auf das Aktivierungssignal die Aktoren (2-4) aktiviert, und zwar für die Dauer einer bestimmten Nachlaufzeit,
**dadurch gekennzeichnet,**
**daß** die Steuereinrichtung (7) die Dauer der Nachlaufzeit in Abhängigkeit von der Häufigkeit der von dem Anwesenheitssensor (8) empfangenen Aktivierungssignale verändert.

2. System nach Anspruch 1,
**dadurch gekennzeichnet,**
**daß** die Steuereinrichtung (7) nach einer bestimmten Überwachungsperiode eine neue Nachlaufzeit einstellt.

3. System nach Anspruch 2,
**dadurch gekennzeichnet,**
**daß** die Dauer der Überwachungsperiode der zuletzt eingestellten Nachlaufzeit entspricht.

4. System nach Anspruch 2 oder 3,
**dadurch gekennzeichnet,**
**daß** die Steuereinrichtung (7) die neue Nachlaufzeit in Abhängigkeit von der Anzahl der in der letzten Überwachungsperiode empfangenen Aktivierungssignale einstellt.

5. System nach einem der vorherigen Ansprüche,
**dadurch gekennzeichnet,**
**daß** die Steuereinrichtung (7) eine kurze Nachlaufzeit einstellt, wenn die Häufigkeit der empfangenen Aktivierungssignale hoch ist, und ein lange Nachlaufzeit einstellt, wenn die Häufigkeit der empfangenen Aktivierungssignale niedrig ist.

6. System nach einem der vorgegebenen Ansprüche,
**dadurch gekennzeichnet,**
**daß** die Steuereinrichtung (7) die Nachlaufzeit zwischen einer Maximaldauer und einer Minimaldauer einstellt.

7. System nach Anspruch 6,
**dadurch gekennzeichnet,**
**daß** die Maximaldauer 15min und die Minimaldauer 3min beträgt.

8. System nach einem der vorherigen Ansprüche,
**dadurch gekennzeichnet,**
**daß** die Steuereinrichtung (7) die Intensität der von dem Anwesenheitssensor (8) erfaßten Bewegungen berücksichtigt, wobei sie beim Erkennen von schnellen Bewegungen die Nachlaufzeit verkürzt und beim Erkennen von langsamen Bewegungen die Nachlaufzeit verlängert.

9. System nach einem der vorherigen Ansprüche,
**dadurch gekennzeichnet,**
**daß** es sich bei dem Anwesenheitssensor (8) um einen passiven Infrarot-Sensor handelt.

10. System nach einem der vorherigen Ansprüche,
**dadurch gekennzeichnet,**
**daß** es sich bei den von der Steuereinrichtung (7) angesteuerten Aktoren um Beleuchtungseinrichtungen (2) handelt.

11. System nach einem der vorherigen Ansprüche,
**dadurch gekennzeichnet,**
**daß** es sich bei den von der Steuereinrichtung (7) angesteuerten Aktoren um Abblendeinrichtungen (4) zum Abblenden des Raumes (1) handelt.

12. System nach einem der vorherigen Ansprüche,
**dadurch gekennzeichnet,**
**daß** es sich bei den von der Steuereinrichtung (7) angesteuerten Aktoren um Einrichtungen zum Regeln der Temperatur (3) in dem Raum (1) handelt.

13. Verfahren zum Steuern mehrerer in einem Raum angeordneter Aktoren (2-4),
wobei die Bewegungen von in dem Raum (1) befindlichen Objekten überwacht werden und beim Feststellen einer Bewegung eines Objekts die Aktoren (2-4) aktiviert werden, und zwar für die Dauer einer bestimmten Nachlaufzeit,
**dadurch gekennzeichnet,**
**daß** die Dauer der Nachlaufzeit in Abhängigkeit von der Häufigkeit der erfaßten Bewegungen verändert wird.

14. Verfahren nach Anspruch 13,
**dadurch gekennzeichnet,**
**daß** nach einer bestimmten Überwachungsperiode eine neue Nachlaufzeit einstellt.

15. Verfahren nach Anspruch 14,
**dadurch gekennzeichnet,**
**daß** die Dauer der Überwachungsperiode der zuletzt eingestellten Nachlaufzeit entspricht.

16. Verfahren nach Anspruch 13 oder 14,
**dadurch gekennzeichnet,**
**daß** die neue Nachlaufzeit in Abhängigkeit von der Anzahl der in der letzten Überwachungsperiode erfaßten Bewegungsvorgänge eingestellt wird.

17. Verfahren nach einem der Ansprüche 13 bis 16,
**dadurch gekennzeichnet,**
**daß** die eine kurze Nachlaufzeit eingestellt wird, wenn die Häufigkeit der erfaßten Bewegungsvorgänge hoch ist und ein lange Nachlaufzeit eingestellt wird, wenn die Häufigkeit der erfaßten Bewegungsvorgänge niedrig ist.

18. Verfahren nach einem der Ansprüche 13 bis 17,
**dadurch gekennzeichnet,**
**daß** die Intensität der erfaßten Bewegungsvorgänge berücksichtigt wird, wobei beim Erkennen von schnellen Bewegungen die Nachlaufzeit verkürzt und beim Erkennen von langsamen Bewegungen die Nachlaufzeit verlängert wird.

19. Verfahren nach einem der Ansprüche 13 bis 17
**dadurch gekennzeichnet,**
**daß** die Nachlaufzeit zwischen einer Maximaldauer und einer Minimaldauer eingestellt wird.

20. Verfahren nach Anspruch 19,
**dadurch gekennzeichnet,**
**daß** die Maximaldauer 15min und die Minimaldauer 3min beträgt.

21. Verfahren nach einem der Ansprüche 13 bis 20,
**dadurch gekennzeichnet,**
**daß** es sich bei den Aktoren um Beleuchtungseinrichtungen (2) handelt.

22. Verfahren nach einem der Ansprüche 13 bis 21,
**dadurch gekennzeichnet,**
**daß** es sich bei den Aktoren um Abblendeinrichtungen (4) zum Abblenden des Raumes (1) handelt.

23. Verfahren nach einem der Ansprüche 13 bis 22,
**dadurch gekennzeichnet,**
**daß** es sich bei den Aktoren um Einrichtungen zum Regeln der Temperatur (3) in dem Raum (1) handelt.
